# FASCICULE DE BREVET EUROPEEN

(11) **EP 0 636 765 B1**
(45) Date de publication et mention de la délivrance du brevet: **09.10.1996**
(21) Numéro de dépôt: 94401623.7
(22) Date de dépôt: 13.07.1994
(51) Int. Cl.: F01D 5/08

(54) **Refroidissement de disque de rotor de turbine**
Kühlung von Turbinenrotorscheibe
Cooling of turbine rotor disk

(30) Priorité: 15.07.1993 FR 9308665
(43) Date de publication de la demande: 01.02.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Charier, Gilles Alain, F-77130 La Grande Paroisse (FR); Guyonnet, Xavier J.M.A., F-77310 Saint Fargeau Ponthierry (FR); Picard, Jean-Louis, F-77000 Vaux Le Penil (FR)

(56) Documents cités:
- EP-A- 0 266 235
- EP-A- 0 447 886
- GB-A- 2 100 360
- GB-A- 2 146 113
- GB-A- 2 246 836
- US-A- 4 807 433

## Description

L'invention concerne une turbomachine munie d'un moyen de soufflage sur un élément de rotor tel qu'un disque de turbine.

Les performances toujours accrues exigées des turboréacteurs d'avion impliquent en particulier une augmentation du rapport entre la poussée et la masse.

Un moyen possible pour alléger les rotors et augmenter ce rapport consiste à utiliser des disques de rotor d'une seule pièce, appelés souvent DAM (Disque Aubagé Monobloc) ou *"BLISK"* en anglais. Ces disques semblent jusqu'à présent réservés aux compresseurs situés en amont des chambres de combustion, car les disques de turbine, situés en aval des chambres de combustion, sont exposés à des échauffements dus aux gaz de propulsion portés à température élevée, notamment aux endroits périphériques des disques qui portent les raccordement aux échasses des aubes, et des gradients thermiques excessifs sont donc produits dans les disques en direction radiale. Il est connu que de l'air ou du gaz frais peut être prélevé d'une autre région de la turbomachine pour assurer la ventilation d'une pièce surchauffée, mais un problème existe ici car la vitesse tangentielle de la périphérie à refroidir d'un disque de turbine est trop grande pour qu'on puisse installer un joint d'étanchéité annulaire de nature mécanique, à brosse ou à labyrinthe, qui couvrirait l'intervalle entre cette périphérie et une couronne fixe lui faisant face et d'où les gaz de ventilation seraient soufflés. Ils faudrait donc accepter une fuite du gaz de ventilation dans la veine d'écoulement des gaz de propulsion et une perte de l'efficacité de ventilation.

L'invention constitue une solution à cette difficulté et permet de refroidir suffisamment les zones périphériques des disques concernés par l'échauffement, c'est-à-dire d'utiliser des disques d'un bloc et plus légers, et cela sans nécessiter de dispositif d'accélération de gaz de ventilation vers la zone ventilée, ce qui réduirait les fuites vers la veine d'écoulement mais nuirait encore à l'efficacité de la ventilation.

La turbomachine conforme à l'invention, qui comprend une chambre de combustion en amont d'une turbine constituée en partie d'un élément de rotor monobloc garni d'aubes ainsi qu'une voie de communication et de soufflage de gaz de la chambre de combustion vers une zone périphérique du rotor, adjacente aux aubes, la voie étant dédoublée devant la zone adjacente aux aubes en une voie interne et une voie externe entourant la voie interne, est originale en ce que la plus grande partie du gaz passe par la voie interne et en ce que la voie externe est rétrécie pour accélérer le reste du gaz et empêcher le gaz ayant passé par la voie inerne de se disperser vers l'extérieur. L'essentiel du débit des gaz à haute pression qui est prélevé de la chambre de combustion pour assurer la ventilation s'écoule librement et par le court chemin de la voie interne vers le rotor monobloc de turbine, ce qui rend inutile tout dispositif d'accélération. Le confinement des gaz hors de la veine de circulation des gaz de propulsion de la machine est assuré par la portion des gaz qui passe par la voie externe. Ce dispositif n'est guère comparable à celui de GB-A-2 246 836, où les deux voies superposées consistent en une voie extérieure à section uniforme qui assure un écoulement principal permanent, et une voie intérieure obstruée par un clapet qui ne s'ouvre qu'aux régimes élevés de la machine pour donner un supplément de ventilation ; les deux voies sont toujours ouvertes dans l'invention.

On remarquera encore GB-A-2 100 360 qui décrit avec minutie comment on peut s'arranger pour que du gaz de ventilation soufflé par une voie unique parvienne effectivement au disque à refroidir en le portant à une pression plus élevée ou en installant des buses qui s'étendent presque jusqu'au disque.

La voie interne est avantageusement occupée par une vrille de mise en vitesse circulaire du gaz de ventilation pour le porter à une vitesse proche de la vitesse tangentielle de la partie du rotor à refroidir et améliorer l'échange de chaleur par un passage plus long du gaz de ventilation sur le rotor et par un abaissement de la température totale par rapport au repère mobile solidaire du rotor, surtout si celui-ci est pourvu d'ouvertures dans lesquelles le gaz pénètre pour séjourner dans un creux taillé dans la zone à refroidir. L'efficacité de l'extraction de chaleur est alors très accrue.

On va maintenant décrire l'invention plus en détail à l'aide des figures suivantes, annexées à titre illustratif et non limitatif :
- la figure 1 représente une structure générale de turboréacteur sur lequel l'invention peut être implantée,
- la figure 2 illustre un placement de l'invention,
- et la figure 3 est un agrandissement de la figure 2 qui représente l'invention plus en détail.

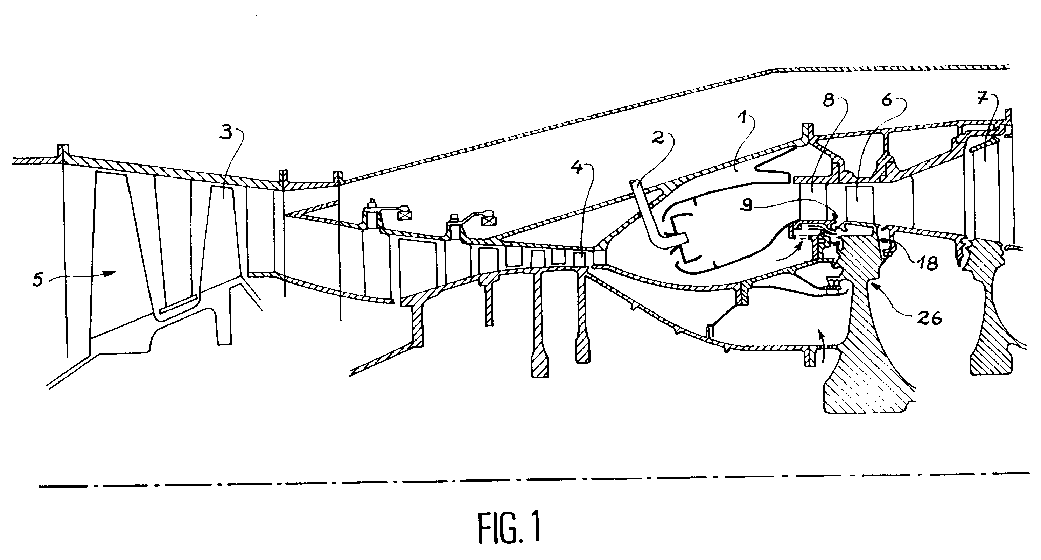

La figure 1 représente un turboréacteur où l'on distingue au centre une chambre de combustion 1 munie en particulier d'injecteurs de kérosène 2 et qui est alimentée par de l'air ayant traversé un compresseur à basse pression 3 et un compresseur à haute pression 4 qui occupent deux sections d'une veine 5 d'écoulement des gaz. La veine 5 d'écoulement des gaz de propulsion est annulaire et s'étend aussi en aval de la chambre de combustion 1, où deux de ses sections sont occupées par une turbine à haute pression 6 et une turbine à basse pression 7 qui entraînent les compresseurs 3 et 4 par l'intermédiaire d'arbres non représentés. Compresseurs et turbines sont constitués de disques garnis d'aubes et appartiennent au rotor du turboréacteur. De plus, la veine 5 est occupée par des étages d'aubes fixes de redressement ou de distribution qui alternent avec les étages d'aubes des turbines et des compresseurs. Un de ces étages appartient à un distributeur à haute pression 8 situé entre la chambre de combustion 1 et la turbine à haute pression 6.

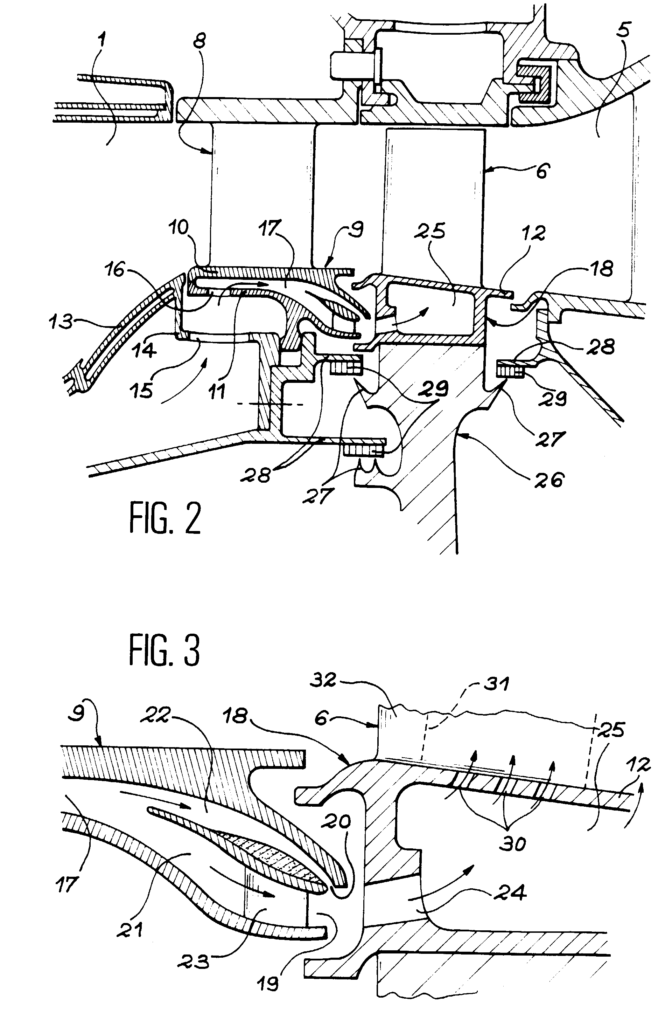

On aborde à présent la figure 2.

Les aubes du distributeur à haute pression 8 sont unies à leurs extrémités intérieures par une couronne 9 qui est creuse et dont la face extérieure 10 forme une limite de la veine 5, entre une face extérieure 12 du disque 26 de la turbine à haute pression 6 et une paroi incurvée 13 qui canalise les gaz formés dans la chambre de combustion 1.

La couronne 9 possède une face intérieure 11 qui est située en face d'un rebord 14, orienté comme elle en direction radiale, de la chambre de combustion 1. La paroi incurvée 13 sépare la partie de la chambre de combustion 1 que le rebord 14 délimite de celle où les injecteurs de kérosène 2 créent l'apport d'énergie aux gaz. Cette partie à l'écart des injecteurs de kérosène 2 est donc occupée par de l'air relativement frais apte à ventiler les parties de la machine proches de la veine 5 en aval de la chambre de combustion 1, où circulent les gaz de combustion beaucoup plus chauds.

Il se trouve que le rebord 14 est percé d'évidements 15, de même que la face intérieure 11 est percée d'évidements 16 qui permettent ainsi à l'air frais de ventilation de s'écouler par sa pression dans le creux 17 de la couronne 9, en direction axiale vers l'aval et la zone de raccordement 18 du disque 26 aux aubes, zone qui doit subir la ventilation et le refroidissement, ainsi que les aubes 6.

On se reporte maintenant à la figure 3. Le creux 17 est terminé vers la zone de raccordement 18 par une ouverture intérieure 19 et une ouverture extérieure 20, toutes deux annulaires ou du moins discontinues sur une circonférence et qui correspondent aux débouchés d'une voie interne 21 et d'une voie externe 22 entre lesquelles le creux 17 est divisé du côté du disque 12. La plus grande partie de l'air de ventilation s'écoule dans la voie interne 21 et est accélérée dans le sens de rotation du disque 12 en passant par une vrille 23, formée de plaques hélicoïdales, qui occupe une partie de la voie 21. Quant à la voie extérieure 22, elle est rétrécie à l'ouverture 20 de sorte que l'air qui la traverse (à un plus petit débit que la voie intérieure 21 grâce à une section d'entrée plus étroite) la quitte en formant une gaine mince à grande vitesse qui entoure le reste de l'air de ventilation et l'empêche donc de se disperser prématurément vers l'extérieur et la veine 5 d'écoulement. En d'autres termes, la pression dynamique de l'air de la voie extérieure 22 équilibre la pression statique de l'air de la voie intérieure 21. Presque tout l'air de ventilation est donc soufflé dans des ouvertures 24 ménagées devant le débouché 19 de la voie interne 21, à travers la face frontale de la zone de raccordement 18, et s'écoule dans un creux 25 de celle-ci où l'air de ventilation absorbe une partie de la chaleur de cette région périphérique du disque 26 avant de sortir du creux 25 en direction des aubes à cavité. Des perçages 30 ménagés à travers la face extérieure 12 du disque 26 permettent à l'air de ventilation de s'écouler du creux 25 vers les cavités 31 au coeur des aubes 32 de la turbine 6, qui sont alors parcourues et refroidies elles aussi. L'air de ventilation s'échappe enfin dans la veine 5 et contribue à la propulsion après avoir pleinement rempli son rôle de refroidissement grâce au séjour assez long contre la matière de la périphérie du disque 26 et des aubes 32.

Le disque 26 est muni de léchettes 27, c'est-à-dire de crêtes d'orientation radiale devant lesquelles s'étendent des portées 28 que recouvrent un matériau tendre 29, souvent appelé abradable dans cette technique et qui est sculpté par le frottement des léchettes 27 pour ne former avec elle qu'un tout petit jeu, qui établit une étanchéité suffisante. On évite ainsi l'écoulement d'air de ventilation vers l'axe de la turbomachine.

Cette combinaison d'un conduit interne de ventilation et d'un conduit externe de création d'une gaine gazeuse constituant une barrière peut être appliquée à d'autres parties de la turbomachine.

## Revendications

1. Turbomachine comprenant une chambre de combustion (1) en amont d'une turbine (6) constituée en partie par un élément de rotor monobloc (26) garni d'aubes, comprenant une voie de communication et de soufflage (17, 21, 22) de gaz de la chambre de combustion vers une zone périphérique (18) du rotor, adjacente aux aubes, la voie étant dédoublée devant la zone adjacente aux aubes en une voie interne (21) et une voie externe (22) entourant la voie interne (21), caractérisée en ce que la plus grande partie du gaz passe par la voie interne (21) et en ce que la voie externe (22) est rétrécie pour accélérer le reste du gaz et empêcher le gaz ayant passé par la voie interne de se disperser vers l'extérieur.

2. Turbomachine suivant la revendication 1, caractérisée en ce que la turbine est séparée de la chambre de combustion par une structure de distributeur (8) comprenant un anneau (9), en face de la zone périphérique (18) du rotor et que la voie de communication traverse.

3. Turbomachine suivant l'une quelconque des revendications 1 ou 2, caractérisée en ce que la voie interne est garnie d'une vrille (23) de mise en vitesse circulaire du gaz.

4. Turbomachine suivant la revendication 3, caractérisée en ce que la zone périphérique (18) est formée avec un creux (25) ouvert par des orifices (24) situés devant la voie interne (21).

5. Turbomachine suivant la revendication 4, caractérisée en ce que le creux (25) communique par des perçages (30) avec des cavités (31) des aubes (32) du rotor.

## Patentansprüche

1. Turbomaschine mit einer Brennkammer (1) stromaufwärts einer Turbine (6), die teilweise durch ein Monoblock-Rotorelement (26) mit Schaufeln gebildet wird, das einen Weg (17,21,22) zur Verbindung und zum Blasen der Gase der Verbrennungskammer in Richtung eines Randbereichs (18) des Rotors in der Nähe der Schaufeln aufweist, wobei der Weg vor dem an die Schaufeln angrenzenden Bereich in einen Innenweg (21) und einen Außenweg (22), der den Innenweg (21) umhüllt, verzweigt ist,
dadurch **gekennzeichnet,**
daß der größere Teil der Gase durch den Innenweg (21) hindurchgeht, und daß der Außenweg (22) zur Beschleunigung der restlichen Gase und zur Verhinderung, daß die durch den Innenweg hindurchgegangenen Gase sich nach außen ausbreiten, eingeengt ist.

2. Turbomaschine nach Anspruch 1,
dadurch **gekennzeichnet,**
daß die Turbine von der Verbrennungskammer durch eine Verteilerkonstruktion (8) mit einem Ring (9) gegenüberliegend dem Randbereich (18) des Rotors und durch die der Verbindungsweg hindurchgeht, abgetrennt ist.

3. Turbomaschine nach einem der Ansprüche 1 oder 2,
dadurch **gekennzeichnet,**
daß der Innenweg eine Spiralführung (23) zur kreisförmigen Beschleunigung des Gases versehen ist.

4. Turbomaschine nach Anspruch 3,
dadurch **gekennzeichnet,**
daß der Randbereich (18) mit einem Hohlraum (25) ausgebildet ist, der durch Öffnungen (24) geöffnet ist, die vor dem Innenweg (21) liegen.

5. Turbomaschine nach Anspruch 4,
dadurch **gekennzeichnet,**
daß der Hohlraum (25) durch Bohrungen (30) mit den Hohlräumen (31) der Schaufeln (32) des Rotors in Verbindung steht.

## Claims

1. Turbomachine comprising a combustion chamber (1) upstream of a turbine (6) consisting in part of a single-piece rotor element (26) fitted with blades, comprising a passage (17, 21, 22) for the communication and blowing of gas from the combustion chamber towards a peripheral region (18) of the rotor, adjacent to the blades, the passage being divided, in front of the region adjacent to the blades, into an inner passage (21) and an outer passage (22) surrounding the inner passage (21), characterized in that most of the gas passes through the inner passage (21) and in that the outer passage (22) is narrowed in order to accelerate the rest of the gas and prevent the gas which has passed through the inner passage from dispersing outwards.

2. Turbomachine according to Claim 1, characterized in that the turbine is separated from the combustion chamber by a distributor structure (8) comprising a ring (9), facing the peripheral region (18) of the rotor and through which the communication passage passes.

3. Turbomachine according to either one of Claims 1 and 2, characterized in that the inner passage is fitted with a spin-inducing device (23) for giving the gas a circular speed.

4. Turbomachine according to Claim 3, characterized in that the peripheral region (18) is formed with a hollow (25) opened by orifices (24) situated in front of the inner passage (21).

5. Turbomachine according to Claim 4, characterized in that the hollow (25) communicates via drillings (30) with cavities (31) of the blades (32) of the rotor.
